# EUROPEAN PATENT APPLICATION

(11) **EP 3 748 609 A1**
(43) Date of publication of application: **09.12.2020**
(21) Application number: 19179022.9
(22) Date of filing: 07.06.2019
(51) Int. Cl.: G09B 23/28, G09B 23/30

(54) **CARDIAC SIMULATION DEVICE**

(71) Applicant: Medizinische Universität Graz, 8036 Graz (AT); Technische Universität Graz, 8010 Graz (AT)
(72) Inventor: Dapunt, Otto, A-8042 Graz (AT); Spiliopoulos, Sotirios, A-8020 Graz (AT); Hergesell, Vera, A-8020 Graz (AT); Agrafiotis, Emmanouil, A-8010 Graz (AT); Holzapfel, Gerhard, A-8042 Graz (AT); Sommer, Gerhard, A-8042 Graz (AT); Geith, Markus Alfons, A-8010 Graz (AT); Gruber, Markus, A-8561 Söding (AT)
(74) Representative: Keschmann, Marc

(57) **Abstract**

A cardiac simulation device comprising
- a ventricle chamber for simulating a ventricle of a heart, said ventricle chamber having an inflow opening and an outflow opening,
- an aortic arch channel for simulating an aortic arch that is connected to the outflow opening, wherein the aortic arch channel is fluidly connected to the inflow opening to form a circulation loop,
- a pump for causing a pulsatile flow of a liquid in said circulation loop through said ventricle chamber, and
- a compliance chamber that is in fluid communication with the circulation loop,
characterized in that the compliance chamber comprises volume adjustment means for adjusting the volume of the compliance chamber, that at least one pressure sensor is provided for measuring the pressure in the circulation loop, in particular in the ventricle chamber and/or in the aortic arch channel, and in that control means are provided for controlling the volume adjustment means as a function of pressure readings obtained from the at least one pressure sensor.

## Description

The invention refers to a cardiac simulation device comprising
- a ventricle chamber for simulating a ventricle of a heart, said ventricle chamber having an inflow opening and an outflow opening,
- an aortic arch channel for simulating an aortic arch that is connected to the outflow opening, wherein the aortic arch channel is fluidly connected to the inflow opening to form a circulation loop,
- a pump for causing a pulsatile flow of a liquid in said circulation loop through said ventricle chamber, and
- a compliance chamber that is in fluid communication with the circulation loop.

Cardiac simulation devices are used for the long-term *in vitro* testing and certification of ventricular assist devices, artificial heart valves, and vascular implants.

The number of cardiovascular diseases is rapidly increasing worldwide. Most of the cases require minimal invasive intervention with vascular implants to therapy perfusion insufficiencies, arterial dissections, and aneurysms with stents and stent grafts. Many interventions include bypasses, artificial heart valves including conventional valves and TAVIs. However, these methods still show high fatality rates due to critical vascular events like restenosis and thrombosis. This can lead to cardiac insufficiency and peripheral artery diseases.

Due to donor shortage so-called end-stage heart failure (HF) patients require a bridge to transplantation solution such as ventricular assist devices (VADs). VADs are implanted as a temporary solution to HF patients to assist the weak ventricle and unload the ventricular workload. The VAD is implanted beneath the ventricular apex and is bypassing the blood to the aorta through the outflow graft of the device. Despite the technological advancements of VADs, numerous adverse events occur, like hemolysis, thrombosis, hemorrhages, etc., triggered by the blood/device interaction.

To develop safer vascular implants or VADs by significantly reducing their fatality rates, scientists and manufacturers seek to change their geometry or their material. Such changes require extensive testing procedures, in order to confirm that the changes result in a reduction of adverse events upon implantation.

Current cardiac simulation devices comprise a ventricle chamber for simulating a ventricle of a heart, an aortic arch channel for simulating an aortic arch, a pump, and a compliance chamber. The compliance chamber simulates ventricular and arterial compliance, which is the volumetric expansion of ventricular and cardiovascular tissue in response to increased pressure. Compliance is needed to dampen pressure waves and maintain blood pressure as the heart refills with blood. Prior art simulation devices comprise passive compliance chambers that employ an elastic membrane able to expand due to pressure differences. Hence, the range of the physiological and pathological scenarios that these systems can reproduce is limited.

It is, therefore, an object of the invention to provide a modular in vitro platform for testing prototypes in the long term under various physiological and pathological conditions. In particular, the simulator shall be capable of mimicking and adjusting the blood pressure and the unidirectional volume flow of the target vessel in real time. Further, the simulator shall be capable of reproducing any ventricular physiological and pathological scenario for testing ventricular assist devices (VADs), artificial heart valves and vascular implants.

In order to solve these and other objects, the invention is characterized in that the compliance chamber comprises volume adjustment means for adjusting the volume of the compliance chamber, that at least one pressure sensor is provided for measuring the pressure in the circulation loop, in particular in the ventricle chamber and/or in the aortic arch channel and/or the compliance chamber, and in that control means are provided for controlling the volume adjustment means as a function of pressure readings obtained from the at least one pressure sensor.

Therefore, an active compliance chamber is provided, which enables to simulate more precisely and in a highly realistic manner in vivo pressure and volume flow conditions of healthy patients and patients with cardiovascular diseases. The inventive simulator could substitute ethically questionable and expensive animal trials.

The active compliance chamber has a variable chamber volume, wherein a volume adjustment means is provided for adjusting the volume of the compliance chamber. In particular, the volume adjustment means are actively driven based on control signals received from control means, such as a control unit. That is, the volume adjustment is not caused by a flexible wall that is displaced in response to a pressure change in the circulation loop as is the case in passive compliance chamber systems, but is actively controlled by the control means.

In order to actively adjust the chamber volume of the compliance chamber, an active drive, such as an electric motor or a hydraulic drive, is provided.

In order to allow for the simulation of various ventricular physiological and pathological scenarios, the inventive simulator is configured to adjust the volume of the compliance chamber so as to simulate desired pressure and volume flow conditions. To this end, the invention provides for at least one pressure sensor that is arranged for measuring the pressure in the circulation loop, in particular in the ventricle chamber and/or in the aortic arch channel and/or the compliance chamber, wherein the control means are provided for controlling the volume adjustment means as a function of pressure readings obtained from the pressure sensor. In this way, for example, an increase of the volume of the compliance chamber results in a reduction of the pressure in the circulation loop and a reduction of the volume of the compliance chamber results in an increase of the pressure in the circulation loop.

Depending on whether the pressure readings from the ventricle chamber, the aortic arch channel or the compliance chamber are used for adjusting the volume of the compliance chamber, physiological or pathological conditions of the ventricle, the aortic arch or the entire circulatory system, respectively, may be simulated.

If, as in accordance with a preferred embodiment, the volume of the compliance chamber is constantly adjusted based on the pressure readings, a real-time system is provided, wherein the volume adjustment means, by being constantly controlled by the control means, may at least partly mimic the function of a passive compliance element, such as an elastic membrane provided in prior art systems that dilates and contracts in response to pressure variations. In contrast to passive compliance elements, however, the inventive active compliance chamber can, in addition, be controlled to actively simulate specific ventricular physiological and pathological scenarios, such as a specific ratio between the systolic and the diastolic pressure prevailing in the ventricle chamber.

Controlling the volume adjustment means as a function of the pressure readings obtained from the pressure sensor may advantageously be performed such that said control means are configured to compare each of said pressure readings with a respective target value and, by adjusting the volume of the compliance chamber, to adjust the pressure to the respective target values. In this way, specific target values can be predefined or selected by the operator of the simulator, and the control means will identify any deviation from the target value and automatically adjust the volume of the compliance chamber so as to reach the target value. In particular, if a plurality of target values are defined at different points in time during a simulated cardiac cycle, said target values can define the desired progression of the pressure that is characteristic for a specific physiological or pathological condition that shall be simulated.

In order to achieve a fast adjustment of the actual pressure to the target value so as to provide a real-time control, a preferred embodiment of the invention provides that the steps of comparing the pressure readings with a target value and of adjusting the pressure to the target value are carried out at a rate of at least 5 per sec, preferably at least 15 per sec.

In order to simulate a specific pressure variation in the ventricle chamber or in the aortic arch, a preferred embodiment provides that the pump is configured to cause a pulsatile flow with pressure variations occurring during each simulated cardiac cycle, wherein the control means are configured to obtain a plurality of pressure readings during each simulated cardiac cycle, to compare each pressure reading of said plurality of pressure readings with a corresponding target value from a series of target values, the series of target values representing a target variation of the pressure during a simulated cardiac cycle, and, by adjusting the volume of the compliance chamber, to adjust the pressure to the target value after each said step of comparing.

Preferably, the target values of said series of target values represent a target pressure curve over time during a simulated cardiac cycle, wherein the control means are configured to compare the pressure readings with the target values and, by adjusting the volume of the compliance chamber, to adjust the pressure to the target pressure curve.

As mentioned above, the active compliance chamber of the invention differs from prior art passive compliance chambers in that the volume adjustment of the compliance chamber can be actively controlled in a precise manner. In this connection, a preferred embodiment provides that the volume adjustment means comprise a rigid displaceable wall that delimits the compliance chamber, wherein drive means, such as an electric motor, are provided for displacing the rigid wall under the control of the control means. Here, it is essential that the volume of the compliance chamber is exactly defined at any time by designing the volume adjustment means as a rigid wall. Therefore, pressure variations prevailing in the circulation loop do not result in a contraction or a dilatation, and thus bulging, of the wall. Preferably, the compliance chamber is confined by rigid walls on all sides.

Preferably, said rigid wall is formed on a displaceable piston. Here, the displaceable piston serves as the volume adjustment means and is operatively connected with a drive that serves to displace the piston in response to control signals received from the control means. Preferably, the piston is driven by means of an electric motor, preferably a three-phase synchronous servomotor. The motor is characterized by a high velocity so that the active compliance chamber is extremely flexible, and any pathological and physiological scenario is reproducible.

The volume of the compliance chamber is preferably selected so as to cover a great range of pressure alterations, such as, e.g., from 0 mmHg to 600 mmHg. Preferably, the maximum volume of the compliance chamber is greater than 120ml, preferably greater than 150ml.

As mentioned above, the compliance chamber is in fluid communication to the circulation loop. In principle, the compliance chamber may communicate with the circulation loop at any position along the circulation loop. According to a preferred embodiment, the compliance chamber is arranged to communicate with the circulation loop at a position downstream of the aortic arch channel, in particular between the aortic arch channel and the inflow opening of the ventricle chamber.

Preferably, the circulation loop comprises a T-piece, which comprises an inflow section and an outflow section that are aligned with each other and which further comprises a branching section extending transverse to the inflow and the outflow section and to which the compliance chamber is connected. The inflow section and the outflow section are aligned with each other in order to maintain the direction of the flow in the circulation loop.

As to the pump that is provided for causing a pulsatile flow of a liquid in the circulation loop, a preferred embodiment provides that the pump is designed as a piston pump. Preferably, the piston of the piston pump is driven by an electric motor, preferably a three-phase synchronous servomotor. The motor-driven piston sucks fluid into the ventricle chamber via the inflow opening and ejects it through the outflow opening of the ventricle chamber. Preferably, an artificial heart valve is arranged at the inflow opening in order to mimic a mitral valve and an artificial heart valve is arranged at the outflow opening to mimic an aortic valve. The three-phase synchronous servomotor allows the performance of a high pulse rate with a smooth kinesis of the piston. Consequently, it results in accurate pressure values without the oscillations from the interfering noise that would otherwise occur in low-frequency solutions.

Preferably, the pump, in particular the piston pump, is directly attached to the ventricle chamber.

The stroke volume of the cardiac simulator is determined by the distance that the piston of the piston pump travels within its cylinder. Preferably, the pump is configured to cause a volume displacement of greater than 120 ml, preferably greater than 150 ml. This amount is sufficient to support the ventricular healthy (70 ml), exercise (up to 100 ml) and heart failure (40-50 ml) conditions.

In order to allow the testing of ventricular assist devices, a preferred embodiment provides that the ventricular chamber comprises a second outflow opening, to which a bypass channel is connected, the bypass channel being configured for mounting a ventricular assist device and opening out into the aortic arch channel. Preferably, the second outflow opening is located close to the pump, in order to minimize the internal flow resistance, In this way, the in vivo VAD implantation is mimicked. In particular, the second outflow opening is arranged between the outflow opening having the aortic valve and the pump.

In order to facilitate the mounting and demounting of a ventricular assist device to the cardiac simulation device, the aortic arc channel comprises a section that is arranged in a mounting part, said mounting part comprising a branching channel with connecting means for connecting an outflow section of the bypass channel thereto.

In order to flexibly mount artificial valves to be tested to the ventricle chamber, a preferred embodiment provides that the inflow opening and/or the outflow opening of the ventricle chamber comprises connection means for connecting an artificial heart valve thereto.

In the following, the invention will be explained in more detail with reference to the attached drawings. In the drawings, Fig. 1 shows a schematic illustration of the cardiac simulation device according to the invention, Fig. 2 shows a detailed view of the ventricle chamber with a bypass channel and Fig. 3 shows a detailed view of the compliance chamber.

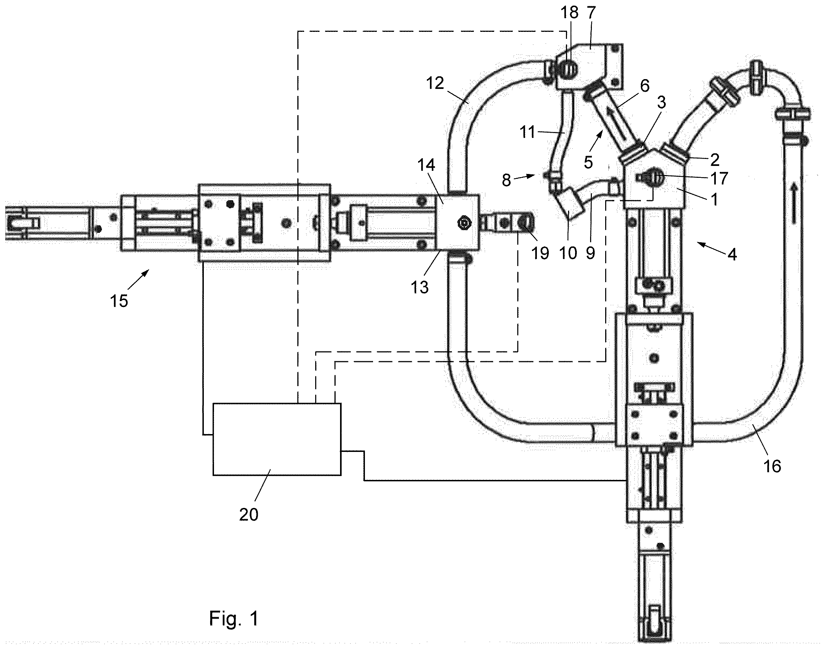

In Fig. 1 a ventricle chamber is denoted by the reference numeral 1. The ventricle chamber 1 comprises an inflow opening, to which an artificial mitral valve 2 is mounted and an outflow opening, to which an artificial aortic valve 3 is mounted. A piston pump 4 is connected to the ventricle chamber 1 for causing a pulsatile flow, wherein fluid is sucked into the ventricle chamber 1 through the artificial mitral valve 2 and pushed out of the ventricle chamber 1 through the artificial aortic valve 3. An aortic arch channel 5 is connected to the artificial aortic valve 3, which comprises a tube 6 and a mounting part 7. Further, a bypass channel 8 connects a second outflow opening of the ventricle chamber 1 and the mounting part 7, wherein the bypass channel 8 is composed of a tube 9, a ventricular assist device 10 and another tube 11.

The outflow opening of the mounting part 7 is connected to a tube 12, which connects the mounting part 7 with a T-piece 13, which houses the compliance chamber 14, which is in fluid communication with the volume adjustment means 15. The T-piece 13 is connected with the inflow opening of the ventricle chamber 1 by means of the tube 16. In this way, a circular loop is formed by the ventricle chamber 1, the aortic arch channel 5, the tube 12, the compliance chamber 14 and the tube 16.

Pressure sensors are provided for measuring the fluid pressure at different locations within the circular loop. A pressure sensor 17 is arranged for measuring the pressure in the ventricle chamber 1. A pressure sensor 18 is arranged for measuring the pressure in the aortic arch channel 5. A pressure sensor 19 is arranged for measuring the pressure in the compliance chamber 14.

Further, a control unit 20 is provided, to which the readings of the pressure sensors 17, 18 and 19 are fed. The control unit 20 has an electronic storage for pressure target values and is configured to generate control signals for the piston pump 4 and the volume adjustment means 15 as a function of the pressure readings and the pressure target values and as a function of the desired stroke volume.

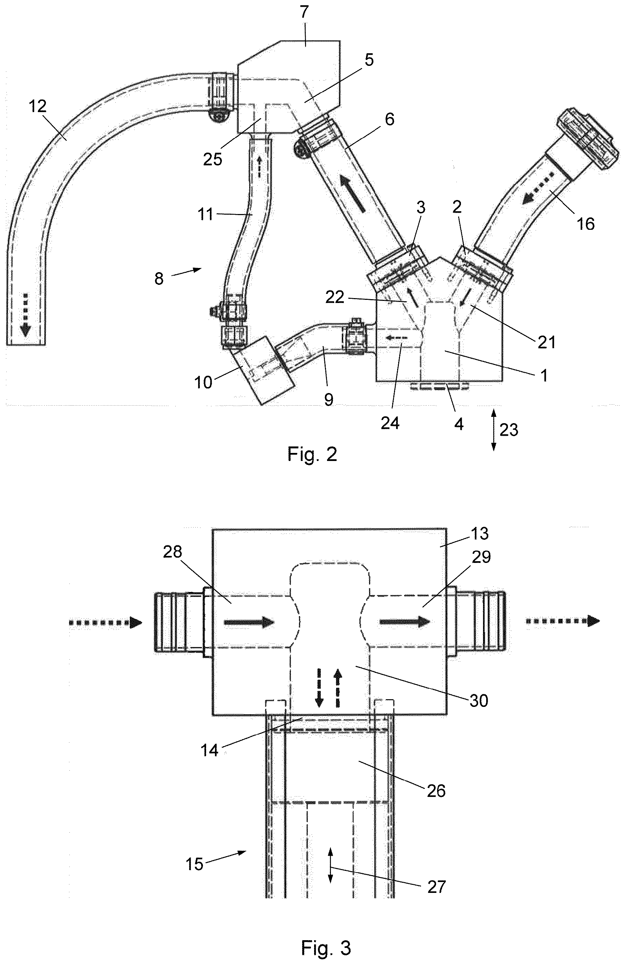

Fig. 2 shows a detailed view of the ventricle chamber 1, the aortic arch channel 5 and the bypass channel 8. The ventricle chamber 1 comprises an inflow section 21 and an outflow section 22 that open into the ventricle chamber 1 in a V-configuration. The piston pump 4 comprises a piston (not shown) that is arranged to be movable in the direction of the double arrow 23. The cylinder of the piston pump opens into the ventricle chamber 1 on the side that is opposite of the inflow section 21 and the outflow section 22, wherein the direction of the double arrow 23 extends along a symmetry line of the V-configuration of the inflow section 21 and the outflow section 22. A second outflow section 24 opens into the ventricle chamber 1 adjacent the piston pump 4, i.e. on a side portion of the ventricle chamber 1 that is arranged between the piston pump 4 and the V-configuration of the inflow section 21 and the outflow section 22. The second outflow section 24 extends transversally to the direction of the double arrow 23.

Fig. 2 also shows the mounting part 7 in more detail. The mounting part 7 houses an end section of the aortic arch channel 5 that is angled or arched and further houses a branching channel 25 with connecting means for connecting the tube 11 of the bypass channel 8 thereto.

Fig. 3 illustrates the T-piece 13, which houses the compliance chamber 14, which is in fluid communication with the volume adjustment means 15. The volume adjustment means 15 comprises a piston 26 that is displaceable along a direction indicated by the double arrow 27, which extends perpendicular to the inflow section 28 and the outflow section 29 that are aligned with each other. The T-piece 13 further comprises a branching section 30 that extends transverse to the inflow 28 and the outflow 29 section and to which the compliance chamber 14 is connected.

In operation, the ventricular pulsatility is generated via the piston pump 4 driven by a three-phase synchronous servomotor that is placed behind the ventricle chamber 1. During the pulse, the piston retraction allows the fluid to enter the ventricle chamber 1 by opening the artificial mitral valve 2 via the pressure gradient. At the same time, the artificial aortic valve 3 remains closed and the ventricle chamber 1 is filling. Afterward, when the piston of the piston pump 4 begins its ejection phase, the artificial mitral valve 2 is closed instantly. The artificial aortic valve 3 opens to allow the ejection of the stroke volume that is defined by the stroke of the piston pump 4. During ejection, a partial amount of the fluid flows through the second outflow section 24 into the bypass channel 8 to reach the ventricular assist device 10. The amount of the fluid that is passing through the ventricular assist device (VAD) 10 is determined by the pressure gradient that is set by the spinning impeller of the ventricular assist device 10 and the predetermined rpm. Additionally, the amount of the stroke volume is set by the distance that the piston travels within the cylinder of the piston pump 4. The volumetric capacity of the ventricle chamber 1 is up to 157 ml in this example. This amount is sufficient to support the ventricular healthy (70 ml), exercise (up to 100 ml) and heart failure (40-50 ml) conditions. The volumetric capacity of the ventricle chamber 1 is sufficient to cover the additional VAD priming volume that ranges between 20 and 40 ml depending on the type of VAD. Third-generation VADs generally hold a volume closer to 20-25 ml. The high-frequency technology of the servomotor driving the piston pump 4 allows the performance of a high pulse rate with smooth kinesis of the piston. Consequently, it results in accurate pressure values without the oscillations from the interfering noise that occur in low-frequency solutions.

The design of the ventricle chamber aims at testing the mechanical performance of the VADs. The mounting of the VAD inside the ventricle chamber 1 was inspired from the in vivo situation, where the inflow cannula of the VAD is placed inside the ventricle via apical cannulation. Thus, the in vivo VAD implantation is mimicked while the internal flow resistance is minimized by placing the VAD next to the ventricular pulse.

The design of the ventricle chamber 1 allows the testing of heart valves by mounting them before the inflow section 21 and after the outflow section 22. Potentially, the testing includes biological, artificial, or tissue-engineered heart valves.

The active compliance chamber 14 is regulating the volumetric expansion of the circulation due to pressure alterations that arise from the pulsatility of the ventricle chamber 1. Therefore, it is building up the compliance character of the apparatus automatically. This active regulation is based on the piston-motor technology in combination with the pressure sensor 19 that is attached to the T-piece 13. When the sensor 19 receives a signal with a difference in pressure between the target value and the actual value, the motor of the volume adjustment means is being activated. Rapidly, it translates the pressure excess into volume displacement via the piston movement. In this manner, the normalization of the compliance is succeeded in every heartbeat. The volume capacity of the active compliance chamber 14 is up to 157 ml in this example, which is sufficient to cover a great range of pressure alterations from 0 mmHg to 600 mmHg that the ventricle chamber 1 can reproduce. Due to the high velocity of the three-phase synchronous servomotor that drives the piston 26, the active compliance chamber 14 is extremely flexible, and any pathological and physiological scenario is reproducible. Similar to the ventricle chamber 1, the output pressure data is free of interfering noise and the real-time graph is high-throughput without pressure spikes.

The bridging between the ventricle chamber 1 and the active compliance chamber 14 is achieved via the aortic arch channel 5. The aortic arch channel 5 fulfills two functions. The first function is the natural function of the aorta. The second function is to mount any vascular implant that is implanted likewise (bypasses, grafts, VAD outflow grafts, etc.). An important aspect of the aortic arch is to mimic the end-to-side anastomosis of grafts during operational procedures. In vivo, the distal end of the outflow grafts is sutured to the aorta. Here, the mounting part 7 is designed to attach all kind of grafts without suturing them. Therefore, grafts are easily attached and tested. Either bypass, graft, or VAD outflow graft, the volume that was divided inside the ventricle chamber 1 fuse back together inside the mounting part 7. With an artificial heart valve 3 in between the ventricle chamber 1 and the aortic arch channel 5, similar flow conditions are achieved as in vivo conditions. Potentially, between the aortic arch channel 5 and the ventricle chamber 1, vascular implants could be integrated for testing.

To provide automation on the simulator, the control unit 20 provides access for the user via a user interface. The control unit 20 may comprise a two-channeled DC servo drive interface that communicates with the servomotors of the piston pump 4 and of the volume adjustment means 15 for multi-axial dynamic positioning. The user interface provides the possibility of setting the desired stroke volume, the heart rate, and the systolic-diastolic pressure of the pulse. The user interface may also provide the possibility of displaying real-time graphs of the pressure and the volume over time. The pressure data is recorded via the three pressure sensors 17, 18, 19, while the volume data is accurately quantified by the movement of piston 4 and its distance conversion to volumetric expansion.

## Claims

1. A cardiac simulation device comprising
- a ventricle chamber (1) for simulating a ventricle of a heart, said ventricle chamber (1) having an inflow opening and an outflow opening,
- an aortic arch channel (5) for simulating an aortic arch that is connected to the outflow opening, wherein the aortic arch channel (5) is fluidly connected to the inflow opening to form a circulation loop,
- a pump (4) for causing a pulsatile flow of a liquid in said circulation loop through said ventricle chamber (1), and
- a compliance chamber (14) that is in fluid communication with the circulation loop, **characterized in that** the compliance chamber (14) comprises volume adjustment means (15) for adjusting the volume of the compliance chamber (14), that at least one pressure sensor (17, 18, 19) is provided for measuring the pressure in the circulation loop, in particular in the ventricle chamber (1) and/or in the aortic arch channel (5) and/or the compliance chamber (14), and **in that** control means (20) are provided for controlling the volume adjustment means (15) as a function of pressure readings obtained from the at least one pressure sensor (17, 18, 19).

2. Cardiac simulation device according to claim 1, **characterized in that** said control means (20) is configured to compare each of said pressure readings with a respective target value and, by adjusting the volume of the compliance chamber (14), to adjust the pressure to the respective target values.

3. Cardiac simulation device according to claim 2, **characterized in that** the steps of comparing the pressure readings with a target value and of adjusting the pressure to the target value are carried out at a rate of at least 5 per sec, preferably at least 15 per sec.

4. Cardiac simulation device according to claim 2 or 3, **characterized in that** the pump (4) is configured to cause a pulsatile flow with pressure variations occurring during each simulated cardiac cycle, wherein the control means (20) are configured to obtain a plurality of pressure readings during each simulated cardiac cycle, to compare each pressure reading of said plurality of pressure readings with a corresponding target value from a series of target values, the series of target values representing a target variation of the pressure during a simulated cardiac cycle, and, by adjusting the volume of the compliance chamber (14), to adjust the pressure to the target value after each said step of comparing.

5. Cardiac simulation device according to claim 4, **characterized in that** the target values of said series of target values represent a target pressure curve over time during a simulated cardiac cycle and that the control means (20) are configured to compare the pressure readings with the target values and, by adjusting the volume of the compliance chamber, to adjust the pressure to the target pressure curve.

6. Cardiac simulation device according to any one of claims 1 to 5, **characterized in that** the volume adjustment means (15) comprise a rigid displaceable wall that delimits the compliance chamber (14), wherein drive means, such as an electric motor, are provided for displacing the rigid wall under the control of the control means (20).

7. Cardiac simulation device according to claim 6, **characterized in that** said rigid wall is formed on a displaceable piston (26).

8. Cardiac simulation device according to any one of claims 1 to 7, **characterized in that** the circulation loop comprises a T-piece (13), which comprises an inflow section (28) and an outflow section (29) that are aligned with each other and which further comprises a branching section (30) extending transverse to the inflow and the outflow section (28, 29) and to which the compliance chamber (14) is connected.

9. Cardiac simulation device according to any one of claims 1 to 8, **characterized in that** the ventricle chamber (1) comprises a second outflow opening, to which a bypass channel (8) is connected, the bypass channel (8) being configured for mounting a ventricular assist device (10) and opening out into the aortic arch channel (5).

10. Cardiac simulation device according to claim 9, **characterized in that** the aortic arc channel (5) comprises a section that is arranged in a mounting part (7), said mounting part (7) comprising a branching channel (25) with connecting means for connecting an outflow section (11) of the bypass channel (8) thereto.

11. Cardiac simulation device according to any one of claims 1 to 10, **characterized in that** the inflow opening and/or the outflow opening of the ventricle chamber (1) comprises connection means for connecting an artificial heart valve (2, 3) thereto.

12. Cardiac simulation device according to any one of claims 1 to 11, **characterized in that** the pump (4) is designed as a piston pump.

13. Cardiac simulation device according to any one of claims 1 to 12, **characterized in that** the pump is directly attached to the ventricle chamber (1).
